# EUROPÄISCHE PATENTSCHRIFT

(11) **EP 1 382 528 B1**
(45) Veröffentlichungstag und Bekanntmachung des Hinweises auf die Patenterteilung: **12.01.2005**
(21) Anmeldenummer: 03013892.9
(22) Anmeldetag: 20.06.2003
(51) Int. Cl.: B64G 6/00

(54) **Vorrichtung zum Anlegen eines Schutzanzuges**
Device for entering a protective suit
Dispositif pour mettre une combinaison protectrice

(30) Priorität: 17.07.2002 DE 10232216
(43) Veröffentlichungstag der Anmeldung: 21.01.2004
(73) Patentinhaber: EADS Space Transportation GmbH, 28199 Bremen (DE)
(72) Erfinder: Böttcher, Jörg, 28816 Stuhr (DE); Ransom, Stephen, 28816 Stuhr (DE); Steinsiek, Frank, 28205 Bremen (DE)
(74) Vertreter: Hansmann, Dierk, Dipl.-Ing.

(56) Entgegenhaltungen:
- US-A- 4 842 224

## Beschreibung

Die Erfindung betrifft eine Vorrichtung zum Anlegen eines Schutzanzuges, insbesondere eines Anzuges für extraterrestrische Missionen, der über eine auf dem Rücken angebrachte, durch einen abklappbaren Rückentornister verschließbare Anzugsöffnung zu betreten ist, mit einem äußeren Abdicht- und Verschlußsystem, das form- und kraftschlüssig mit der Struktur eines bemannten Wohnbereiches verbindbar ist, mit einem inneren Abdicht- und Verschlußsystem, das form- und kraftschlüssig mit dem zur Seite abklappbaren Rückentornister verbindbar ist, sowie mit wenigstens einer innerhalb des Wohnbereiches vorgesehenen Dekontaminationskammer. Ferner betrifft sie ein Verfahren zum Anlegen eines solchen Schutzanzuges.

Bei bemannten Weltraummissionen, insbesondere bei Landungen auf anderen Himmelskörpern, wie beispielsweise auf dem Mars, besteht einerseits die Gefahr eines unkontrollierten Eintrages terrestrischer Mikro- und Makroorganismen in bisher noch nicht ausreichend erforschte Biosphären anderer Himmelskörper. Auf der anderen Seite muß ein unkontrollierter Eintrag von Spurengasen, toxischen Verbindungen und mikro- bzw. makrobiologischen Lebensformen in die bewohnten Bereiche der Astronauten vermieden werden, um einen sicheren Rückweg zur Erde zu ermöglichen, insbesondere dann, wenn sich die Astronauten frei oder in Fahrzeugen auf der Oberfläche des Himmelskörpers bewegen.

Zu diesem Zweck ist beispielsweise für bemannte Expeditionen zum Mars vorgesehen, daß die für die Missionen auf der Marsoberfläche zu verwendenden Schutzanzüge der Astronauten in einem begehbaren Schleusenraum gelagert und dort angezogen werden. Die Astronauten verlassen dabei durch ein Schott ihren Wohnbereich und gelangen in den unter gleichen Umgebungsbedingungen gehaltenen Schleusenraum. Dort werden die Anzüge angezogen und geschlossen und die atmosphärischen und klimatischen Bedingungen des Schleusenraums werden den Umgebungsbedingungen auf dem Mars angeglichen. Anschließend wird das nach draußen führende Schott geöffnet und die Astronauten treten in die Marsumgebung hinaus. Das Schott wird daraufhin wieder geschlossen, wobei eine Luftströmung im Außenschott das Eindringen von Staubpartikeln verhindern soll. Bei der Rückkehr der Astronauten muß nicht nur die Atmosphäre innerhalb des Schleusenraums, sondern es müssen auch die Anzüge selbst unter hohem Aufwand vollständig dekontaminiert werden.

Die bekannten, für den Einsatz im Orbit oder auf dem Mond verwendeten Raumanzüge unterscheiden sich im wesentlichen durch zwei unterschiedliche Varianten hinsichtlich des Anlegens bzw. Ausziehens dieser Anzüge voneinander, wobei beide Anzüge bzw. beide nachfolgend kurz beschriebenen Vorrichtungen und Verfahren zum Anlegen dieser Anzüge als für einen sicheren Einsatz prinzipiell geeignet angesehen werden können.

Ein unter der Kurzbezeichnung EMU (Extravehicular Mobility Unit) bekannt gewordener erster Raumanzug wird über die Hüfte, d.h. über die Hose bzw. das Anzugunterteil, betreten. Das Oberteil wird dem Astronauten anschließend übergestülpt und mit dem Unterteil verbunden. Als letztes wird der Helm auf das Oberteil aufgesetzt und verschraubt. Die Versorgung des Anzugs erfolgt im allgemeinen über nicht lösbare Schläuche, die entweder direkt mit dem Versorgungssystem des Raumfahrzeuges oder mit einem als Handgepäck getragenen Versorgungsmodul bzw. mit einem Rückentornister verbunden sind.

Daneben ist aus der US 4 842 224 eine Vorrichtung der eingangs genannten Art bekannt geworden, bei der ein aus nur einem Stück bestehender Raumanzug über eine Rückenklappe bzw. eine Öffnung vom Rücken her betreten wird. Nach dem Einstieg erfolgt die Versorgung des Anzuges ebenfalls über einen Rückentornister, wobei dieser Tornister zugleich die Einstiegsluke hermetisch verschließt.

Aufgabe der Erfindung ist es, eine Vorrichtung der eingangs genannten Art derart auszubilden, daß beim Anlegen und Ablegen des Raumanzuges kein Abpumpen von extraterrestrischer Atmosphäre erforderlich ist und daß somit die Gefahr einer Kontamination durch diese Atmosphäre bzw. durch Gase zuverlässig vermieden wird. Weiterhin ist es Aufgabe der Erfindung, ein Verfahren zum Anlegen eines Schutzanzuges unter Verwendung einer derartigen Vorrichtung anzugeben.

Die Lösung besteht in einer Vorrichtung mit den kennzeichnenden Merkmalen des Patentanspruchs 1. Die Lösung für ein Verfahren besteht in den kennzeichnenden Merkmalen des Patentanspruchs 4.

Weitere vorteilhafte Ausbildungen sind durch die Merkmale der Unteransprüche 2 und 3 gekennzeichnet.

Da durch das erfindungsgemäß vorgesehene zusätzliche Abdicht- und Verriegelungssystem zwischen dem Rückentornister und der Dekontaminationskammer jegliches Abpumpen einer Atmosphäre bzw. eines Gases sowohl beim Besteigen des Anzuges als auch bei dessen Verlassen vermieden wird, sind keinerlei eigens für diesen Zweck vorzusehenden Pumpen oder sonstigen Einrichtungen erforderlich. Hierdurch kann bei einer gleichzeitigen Erhöhung der Missionssicherheit ein Teil der mitzuführenden Masse eingespart werden. Beim Besteigen des Raumanzuges durch den Astronauten wird erst nach dem hermetischen Verriegeln der Dekontaminationskammer mit der Struktur des Wohnbereiches über das innere Abdicht- und Verschlußsystem die erfindungsgemäß vorgesehene zusätzliche Verriegelung zwischen dem Rückentornister und der Dekontaminationskammer gelöst.

Nachfolgend soll die Erfindung anhand eines in der Zeichnung dargestellten Ausführungsbeispiels näher erläutert werden. Es zeigen: t
- Fig. 1: einen Astronauten beim Besteigen eines Raumanzuges in perspektivischer Darstellung,
- Fig. 2: eine schematische Darstellung einer Raumstation mit einer Vorrichtung zum Anlegen eines Raumanzuges sowie mit einem Raumanzug in angedocktem Zustand,
- Fig. 3: eine Detaildarstellung der Anordnung gemäß Fig. 2 in Form einer schematischen Draufsicht auf einen Raumanzug in angedocktem Zustand
und
- Fig. 4: eine Detaildarstellung der Anordnung gemäß Fig. 2 mit zwei Dekontaminationskammern zum Be- und Einsteigen eines Raumanzuges, wiederum in perspektivischer Darstellung.

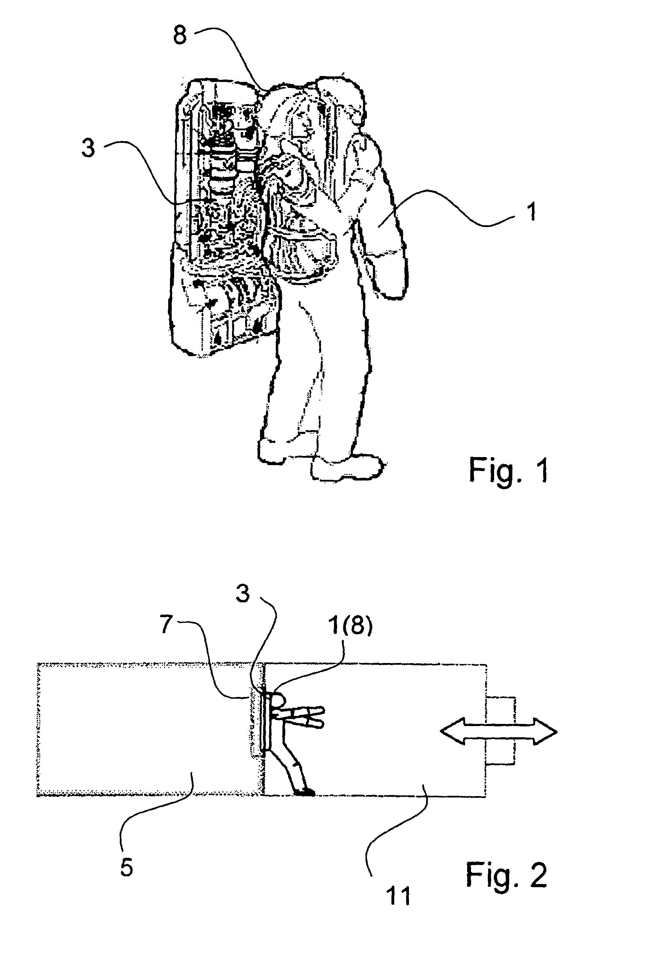

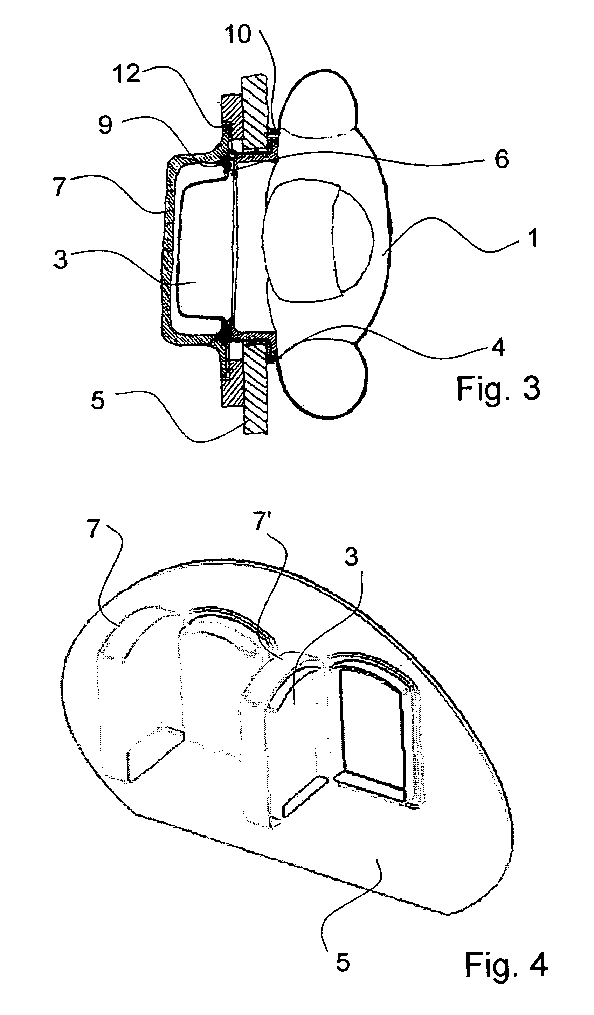

Der in den Figuren 1 und 3 gezeigte einteilige Schutz- bzw. Oberflächenanzug 1 für den Einsatz auf dem Mars entspricht im wesentlichen einem zur Zeit gebräuchlichen Raumanzug, der, wie in Fig. 1 gezeigt, über eine im Rücken befindliche Öffnung bestiegen werden kann und die im Fall des hier beschriebenen Ausführungsbeispiels eine freie Durchstiegsweite von ca. 600 mm x 1100 mm besitzt. Die Öffnung wird durch einen Rückentornister 3 verschlossen, der über ein auf der linken Seite angeordnetes Drehgelenk zur Seite abklappbar ist. Rund um die Öffnung ist ein zweistufiges Dicht- und Klemmsystem zur Abdichtung und zum Verschließen der Öffnung bzw. des Einstieges vorgesehen. Dieses besteht, wie in Fig. 3 zu erkennen, aus einem äußerem Abdicht- und Verschlußsystem 4, das form- und kraftschlüssig mit einer Struktur 5 eines bemannten Wohnbereiches verbunden werden kann, sowie aus einem inneren Abdicht- und verschlußsystem 6, das form- und kraftschlüssig mit dem zur Seite abklappbaren Rückentornister 3 verbunden ist.

Im Rückentornister 3 sind alle notwendigen technischen Systeme untergebracht, die zur Aufrechterhaltung der Funktionen des Anzuges 1 benötigt werden. Hierzu gehören unter anderem
- Komponenten des Lebenserhaltungssystems mit einer Sauerstoffversorgung, einer Aufbereitung und Säuberung der Atemluft sowie einer Temperatur- und Feuchtigkeitskontrolle,
- Komponenten einer Wasserversorgung mit einem Wassertank und einem Wasserspender,
- Komponenten eines Abfallbeseitigungssystem mit einem Abwassertank, einem Filter und einem Müllbeutel,
- Komponenten einer Energieversorgung mit Akkumulatoren und einem Energieverteilungssystem,
- Komponenten zur Kommunikation und Navigation, wie Sender, Empfänger, Antennen und eine System zur Navigation bzw. Funkpeilung, sowie
- Komponenten für den Notfall, Reservesysteme wie Reservetanks für Sauerstoff und Wasser, Notrufsender und eine Notbatterie.

Der Oberflächenanzug ist vor Beginn der Mission, wie in Fig. 2 schematisch dargestellt, über das äußere Abdicht- und Verschlußsystem 4 mit der Wand eines Wohnund Arbeitsbereiches 5 einer bemannten Station auf dem Mars hermetisch dicht form- und kraftschlüssig verbunden. Das Abdicht- und Verschlußsystem 4 dient dabei sowohl als Abdichtung wie auch als Halterung für den Anzug 1. Es hat außerdem die Aufgabe, die Aufhängung des Anzuges an der Luftschleuse zum Wohnund Arbeitsbereich 5 zu gewährleisten. Es nimmt neben der statischen Gewichtskraft, bestehend aus dem Anzug 1 und dem Astronauten 8, auch die beim Ein- und Ausstieg auftretenden zusätzlichen Kräfte und Momente auf. Durch eine spezielle Gestaltung des Andockflansches wird dabei eine genaue Führung und ein Paßsitz erreicht, um die angestrebte hermetische Abdichtung zwischen dem Anzug und der Wohnbereichswand zu gewährleisten, die bei jedem Einsatz wiederholbar realisiert werden muß.

Der Verschluß erfolgt mittels Klemmen, die automatisch nach dem Erreichen der richtigen Position einrasten und die eine form- und kraftschlüssige Verbindung darstellen. Dabei wird durch die integrierte Dichtung eine vollständige, hermetische Trennung zwischen den Bedingungen der Marsumgebung und denen des Wohn- und Arbeitsbereichs gewährleistet. Beim Ablegen erfolgt ein automatisches Öffnen der Klemmen, das über ein Signal durch den Astronauten im Oberflächenanzug oder aber durch die begleitende Missionsmannschaft im Wohn- und Arbeitsbereich 5 ausgelöst werden kann.

Der Wohn- und Arbeitsbereich 5 stellt die zentrale und wichtigste Infrastruktur der bemannten Marsmission auf der Marsoberfläche dar. In ihm sind alle notwendigen Einrichtungen zum Leben, Arbeiten und notfalls auch zum Überleben konzentriert. Hier sind Gemeinschaftsräume, Schlafbereiche, Küche, Sanitärzellen, Laboratorien und Missionszentrale untergebracht. Im Arbeitsbereich sind Andockstationen für Oberflächenanzüge 1 nebeneinander an der Außenwand angeordnet, wie in Fig. 2 schematisch angedeutet und wie anhand von Fig. 4 noch näher erläutert werden soll. In ihnen werden die Oberflächenmissionen vorbereitet, gestartet und am Ende wieder nachbereitet. Dazu gehören im wesentlichen die Wartung der Oberflächenanzüge, wie visuelle Inspektion, Dichtigkeitsmessung, Aufladen der Akkumulatoren, Wiederbefüllen der Gas- und Wasserdruckflaschen und Entleeren der Abwasser- und Abfallbehälter.

Um eine sichere Mission zu ermöglichen, sind innerhalb des Wohnbereiches 5, wie in Fig. 4 gezeigt, Dekontaminationskammern 7, 7' vorgesehen, die über ein ebenfalls zweistufiges Abdicht- und Verschlußsystem sowohl zum Anzug 1 als auch zum Wohnbereich hin isoliert sind. Hierzu dienen jeweils ein externes Abdicht- und Verschlußsystem 12, die form- und kraftschlüssig mit der Struktur des bemannten Wohnbereiches 5 verbunden werden können, sowie ein jeweils zugeordnetes internes Abdicht- und Verschlußsystem 9, das form- und kraftschlüssig mit dem zur Seite abklappbaren Rückentornister 3 verbunden werden kann.

Der für die Mission vorbereitete Rückentornister 3 des Anzuges 1 befindet sich innerhalb der Dekontaminationskammer 7, die ins Innere des Wohn- und Arbeitsbereiches 5 abgeklappt wird, um den Zugang in den Anzug zu ermöglichen und um an die inneren Komponenten des Anzugs gelangen zu können. Die Größe der Dekontaminationskammer 7 wird durch die Größe des Rückentornisters 3 bestimmt.

Die Dekontaminationskammern 7, 7' haben die primäre Aufgabe, den äußeren Teil des abklappbaren Rückentornisters hermetisch gegenüber dem Innern des Wohn- und Arbeitsbereichs zu isolieren und gegebenenfalls den Rückentornister zu dekontaminieren, wenn es erforderlich ist, dabei aber auch den Einstieg in den Anzug zu ermöglichen und gleichzeitig die Komponenten des Tornisters zwecks Wartung erreichbar zu machen. Eine weitere wichtige Aufgabe liegt im Verschließen der Öffnung in der Außenwand des Wohnbereiches, wenn der Oberflächenanzug vom Wohnbereich gelöst wurde und dabei die Öffnung freigegeben wird.

In Fig. 4 ist der Wohnbereich 5 mit zwei nebeneinander angeordneten Anzugsdockingstationen dargestellt. Zu sehen sind dabei die Dekontaminationskammern 7, 7', wobei die in der Figur linke Dekontaminationskammer 7 geöffnet dargestellt ist. Dies ist normalerweise nur dann der Fall, wenn die Dekontaminationskammer von innen oder der Tornister von außen inspiziert und gewartet werden müssen. Die in der Figur rechte Dekontaminationskammer 7' ist zusammen mit dem Tornister 3 des Oberflächenanzuges 1 und der frei zugänglichen Öffnung 2 des Anzuges 1 ins Innere des Wohnbereichs geschwenkt. Dieses ist die normale Position vor dem Einstieg bzw. nach dem Ausstieg sowie während der Rüstphasen.

Die Isolierung des Rückentornisters zum Wohnbereich wird durch ein internes Abdicht- und Verschlußsystem 9 gewährleistet. Die Abdichtung der Öffnung im Wohnbereich, d.h. der Andockstation, erfolgt über ein externes Abdicht- und Verschlußsystem 12, das bei Oberflächeneinsätzen generell geschlossen ist und das aus Sicherheitsgründen auch bei längeren Ruhephasen geschlossen bleibt. Ein Öffnen, das die Zugänglichkeit zum Inneren des Tornisters 3 und des Anzuges 1 gewährleistet, erfolgt erst unmittelbar zur Vorbereitung von Oberflächenmissionen. Die Zugänglichkeit zum Anzug und an das Innere des Rückentornisters wird durch das gemeinsame Abklappen von Dekontaminationskammer und Rückentornister um minimal 90° ermöglicht. Das Abdicht- und Verschlußsystem 9 zwischen Tornister 3 und Dekontaminationskammer 7 bleibt nominal geschlossen.

Eine aus Sicherheitsgründen vorzusehende Dekontamination der in den Wohnbereich hinein reichenden Teile, insbesondere des Rückentornisters 3, wird durch eine Reihe von Maßnahmen vorgenommen. Dazu gehören sowohl chemische als auch physikalische Prozesse bzw. Reaktionen, beispielsweise sind dies der Einsatz von Druckluft und Schutzgasen, die Spülung mit Wasser, Säuren und/oder Laugen sowie das Erhitzen, Abkühlen und Evakuieren.

Ein Fenster in der Rückwand der Dekontaminationskammer 7 läßt eine visuelle Inspektion der äußeren Oberfläche des Rückentornisters zu und ermöglicht zugleich während der Oberflächeneinsätze einen Blick in einen zusätzlich vorgesehenen externen Schutzraum 11.

Im Normalfall ist die Dekontaminationskammer 7 geschlossen, wobei sie den Wohn- und Arbeitsbereich 5 zur Marsumgebung hin hermetisch dicht form- und kraftschlüssig abschließt. Sie übernimmt somit auch die Funktion eines Schotts.

Nachdem die Dichtigkeit von Anzug 1, Aufhängung 4, Dekontaminationskammer 7 und Verriegelung 9 überprüft worden ist, kann durch das Entriegeln des externen Abdicht- und Verschlußsystems 12 der Rückentornister 3 zusammen mit der Dekontaminationskammer 7 aufgeklappt werden. Dadurch wird die Öffnung 2, d.h. der Einstieg in den Oberflächenanzug 1, freigegeben. Der Rückentornister 3 des Oberflächenanzugs 1 ist hermetisch dicht mit der Dekontaminationskammer 7 verbunden (Verriegelung 9 bleibt geschlossen), zugleich. ist die freie Erreichbarkeit der im Innern des Tornisters 3 untergebrachten Komponenten gewährleistet.

Nachdem der ordnungsgemäße Zustand aller Komponenten des Anzuges 1 überprüft wurde und auch noch einmal durch eine Sicht- und Handprüfung verifiziert worden ist, besteigt der Astronaut 8 durch die Öffnung 2 den Anzug 1. Dabei hält er sich mit den Händen an seitlichen Griffen fest und schiebt seine Füße und Beine durch die Öffnung in den Anzug. Wenn als letztes der Kopf in die vorgesehene Position innerhalb des Anzugs gebracht wurde, kann die rückwärtige Öffnung verschlossen werden. Der Verschlußvorgang erfolgt dabei in zwei aufeinanderfolgenden Schritten: Zunächst wird die Dekontaminationskammer 7 über das eigene Abdichtund Verschlußsystem 12 hermetisch dicht mit der Außenwand des Wohnbereichs 5 verbunden. Nach einer erfolgreichen Kontrolle, in der Regel eine Druckmessung, erfolgt dann der zweite Schritt, bei dem der im Innern der Kammer 7 befindliche Rückentornister 3 über sein inneres Abdicht- und Verschlußsystem 6 mit dem Rückenteil des Anzuges 1 hermetisch dicht verschlossen wird.

Schließlich wird die Dichtigkeit aller Verbindungen getestet. Dabei wird der Druckverlauf in der unter dem im Wohnbereich herrschenden Normaldruck gehaltenen Dekontaminationskammer 7 geprüft und es wird der Innendruck der Schleusenkammer gemessen. Erfolgt kein Druckanstieg, so sind sowohl die Außenabdichtungen 4, die Innenabdichtungen 6 als auch die Abdichtungen 9 zwischen dem Tornister 3 und der Dekontaminationskammer 12 sowie zum Wohnbereich hin in Ordnung. Eine Messung des Anzuginnendrucks stellt zudem die Dichtigkeit von Anzug 1 und Dichtung 6 zum Rückentornister 3 hin sicher.

Das Innere der Dekontaminationskammer 7 kann nunmehr auf das Außendruckniveau des Mars gebracht werden, das von der Tages- und Jahreszeit abhängt. Ein erhöhter, auf Erdniveau gehaltener Druck kann dabei das Lösen des Oberflächenanzugs 1 aus seiner Halterung unterstützen. Dabei wird zuerst der Tornister 3 von der Dekontaminationskammer 7 gelöst, Entriegeln des Abdicht- und Verschlußsystems 9; dann erst erfolgt das Entriegeln des äußeren Abdicht- und Verschlußsystems 4. Der Vorgang endet mit dem Loslösen des Anzuges 1 von der Außenwand des Wohnbereiches 5.

Der Astronaut 8 kann sich jetzt entsprechend den Möglichkeiten des Anzuges, den Umgebungsbedingungen sowie den Missionsanforderungen entsprechend frei bewegen und führt die vorgesehene Mission auf der Marsoberfläche durch. Die ersten Schritte erfolgen im allgemeinen in einem geschützten Raum 11, in dem unter anderem die Oberflächenanzüge 1 während der Ruhephasen untergebracht sind. Dieser Raum kann in Form eines Zeltes, Containers oder dergleichen gestaltet und je nach der Aufgabenstellung ausgerüstet sein. So kann er sowohl als Lager für Versorgungsgüter als auch für Untersuchungsobjekte oder als Feldlabor zur Untersuchung von Proben verwendet werden. Die Tür zur Marsumgebung hat dabei nur die Funktion, möglichst viel Staub fernzuhalten.

Zum Ende seiner Mission nähert sich der Astronaut 8 in seinem Oberflächenanzug 1 wieder dem Wohn- und Arbeitsbereich 5. Im allgemeinen wird er in den geschützten Raum 11 eintreten, in dem sich die Halterungen für die Oberflächenanzüge 1 befinden. Dabei dreht sich der Astronaut 8 mit dem Rücken zur freien, geöffneten Dekontaminationskammer 7 und klinkt sich mit dem äußeren Abdicht- und Verschlußsystem 4 in das entsprechende Gegenstück des Wohn- und Arbeitsbereichs 5 ein. Vor dem kraft- und formschlüssigen Verschluß der Verbindung müssen die Dichtstellen von Staub und anderen festen Partikeln gesäubert werden. Dies kann über Preßluft, Staubsauger und/oder Wischlappen erfolgen.

Der Astronaut 8 befindet sich nun, in seinem Oberflächenanzug 1 aufgehängt, an der Modulwand. In einem automatischen Prozeß wird nach dem ordnungsgemäßen Verschließen des äußeren Verschlußsystems 4 das Verschlußsystem 9 zwischen dem Tornister 3 und der Dekontaminationskammer 7 geschlossen. Eine anschließende Dichtigkeitsprüfung, im wesentlichen eine Kontrolle der Verschlußsysteme, ermöglicht dann erst das Öffnen des Anzugs. Die Öffnung des Anzugs wird mit dem aufeinander folgenden Entriegeln der Verschlußsysteme 6 und 9 eingeleitet. Der Tornister 3 wird schließlich zusammen mit der Dekontaminationskammer 7 aufgeklappt. Die rückwärtige Anzugsöffnung 2 wird nunmehr frei zugänglich. Der Astronaut 8 kann seinen engen Ort verlassen, und den Wohn- und Arbeitsbereich betreten, wobei er zuerst den Kopf und die Arme aus dem Anzug 1 heraussteckt und danach die vorhandenen Griffe ergreift und sich aus dem Anzug 1 herauszieht.

Unabhängig vom Ausstieg kann nun der Rückentornister 3 in der Dekontaminationskammer 7 dekontaminiert werden.

Dieser Dekontaminationsvorgang besteht in der Regel aus den bereits erwähnten physikalischen und chemischen Maßnahmen, wie dem Spülen mit Lösungen und Säuren, Erhitzen, Trocknen, Absaugen, etc.. Es erfolgt danach eine Messung mit Biosensoren und mit Partikelmessgeräten. Werden keinerlei Fremdbestandteile gemessen, so kann der Rückentornister 3 abgenommen werden und zu einer eventuell notwendigen Reparatur in das Innere des Wohnbereiches mitgenommen werden. Für die reguläre Wartung muß der Tornister 3 nicht abgenommen werden. Er verbleibt bis zum Beginn der nächsten Mission aufgeklappt oder verbunden mit dem Rücken des Anzuges 1 in der abgekapselten Umgebung der Dekontaminationskammer 7.

## Patentansprüche

1. Vorrichtung zum Anlegen eines Schutzanzuges (1), insbesondere eines Anzuges für extraterrestrische Missionen, der über eine auf dem Rücken angebrachte, durch einen abklappbaren Rückentornister (3) verschließbare Anzugsöffnung zu betreten ist, mit einem äußeren Abdicht- und Verschlußsystem (4), über das der Schutzanzug (1) form- und kraftschlüssig dicht mit der Struktur eines bemannten Wohnbereiches (5) verbindbar ist, mit einem inneren Abdicht- und Verschlußsystem (6), das form- und kraftschlüssig mit dem zur Seite abklappbaren Rückentornister verbindbar ist, sowie mit wenigstens einer innerhalb des Wohnbereiches (5) vorgesehenen Dekontaminationskammer (7, 7'), **dadurch gekennzeichnet, daß** die Dekontaminationskammer (7, 7') über ein zweistufiges Abdicht- und Verschlußsystem (9, 12) sowohl zum Anzug (1) als auch zum Wohnbereich (5) hin isoliert ist.

2. Vorrichtung nach Anspruch 1, **dadurch gekennzeichnet, daß** das externe Abdicht- und Verschlußsystem (12) form- und kraftschlüssig mit der Struktur des bemannten Wohnbereiches (5) verbindbar ist.

3. Vorrichtung nach Anspruch 1 oder 2, **dadurch gekennzeichnet, daß** das interne Abdicht- und Verschlußsystem (9) form- und kraftschlüssig mit dem zur Seite abklappbaren Rückentornister (3) verbindbar ist.

4. Verfahren zum Anlegen eines Schutzanzuges unter Verwendung einer Vorrichtung gemäß einem der Ansprüche 1 bis 3, **gekennzeichnet durch** die folgenden Schritte:
- nach dem Besteigen des Anzuges (1) **durch** einen Astronauten (8) wird die Dekontaminationskammer (7) über das zugeordnete externe Abdicht- und Verschlußsystem (12) hermetisch dicht mit der Außenwand des Wohnbereichs (5) verbunden,
- der im Inneren der Dekontaminationskammer (7, 7') befindliche Rückentornister (3) wird über sein inneres Abdicht- und Verschlußsystem (6) mit dem Rückenteil des Anzuges (1) hermetisch dicht verschlossen,
- das Innere der Dekontaminationskammer (7, 7') wird auf das Außendruckniveau gebracht,
- der Tornister (3) wird vom internen Abdichtund Verschlußsystem (9) der Dekontaminationskammer (7, 7') gelöst,
- das äußere Abdicht- und Verschlußsystem (4) wird entriegelt
- der Anzug (1) wird von der Außenwand des Wohnbereiches (5) abgelöst.

## Claims

1. Device for donning a protective suit (1), in particular a suit for extraterrestrial missions, which is entered via a suit opening fitted on the back and closable via a folding-out backpack (3), with an outer sealing and closure system (4), via which the protective suit (1) can be connected tightly in a positive and non-positive manner to the structure of a manned living area (5), with an inner sealing and closure system (6), which can be connected in a positive and non-positive manner to the backpack (3) that folds out to one side, as well as with at least one decontamination chamber (7, 7') provided inside the living area (5), **characterized in that** the decontamination chamber (7, 7') is isolated relative both to the suit (1) and the living area (5) by way of a two-stage sealing and closure system (9, 12).

2. Device according to claim 1, **characterized in that** the external sealing and closure system (12) can be connected in a positive and non-positive manner to the structure of the manned living area (5).

3. Device according to claim 1 or 2, **characterized in that** the internal sealing and closure system (9) can be connected in a positive and non-positive manner to the backpack (3) that can be folded out to one side.

4. Method for donning a protective suit using a device according to one of claims 1 to 3, **characterized by** the following steps:
- after an astronaut (8) has entered the suit (1), the decontamination chamber (7) is connected via the assigned external sealing and closure system (12) hermetically to the outer wall of the living area (5),
- the backpack (3) located inside the decontamination chamber (7, 7') is closed hermetically via its inner sealing and closure system (6) with the back of the suit (1),
- the interior of the decontamination chamber (7, 7') is brought up to the external pressure level,
- the backpack (3) is detached from the internal sealing and closure system (9) of the decontamination chamber (7, 7'), the outer sealing and closure system (4) is unlatched,
- the suit (1) is detached from the outer wall of the living area (5).

## Revendications

1. Dispositif pour mettre une combinaison protectrice (1), plus particulièrement une combinaison pour missions extraterrestres, dans laquelle on entre par une ouverture de combinaison aménagée dans le dos et fermée par un conteneur dorsal (3) rabattable, comportant un système d'étanchéité et de fermeture (4) externe par lequel la combinaison protectrice (1) peut être liée par complémentarité de formes et par adhérence, de manière étanche à la structure d'une zone de séjour (5) habitée, un système d'étanchéité et de fermeture (6) interne qui peut être lié par complémentarité de formes et par adhérence au conteneur dorsal (3) rabattable latéralement, ainsi qu'au moins une chambre de décontamination (7, 7') prévue à l'intérieur de la zone de séjour (5), **caractérisé par le fait que** la chambre de décontamination (7, 7') est isolée vis-à-vis de la combinaison protectrice (1) et de la zone de séjour (5) par un système d'étanchéité et de fermeture (9, 12) à deux étages.

2. Dispositif selon la revendication 1, **caractérisé par le fait que** le système d'étanchéité et de fermeture (12) externe peut être lié par complémentarité de formes et par adhérence à la structure de la zone de séjour (5) habitée.

3. Dispositif selon la revendication 1 ou 2, **caractérisé par le fait que** le système d'étanchéité et de fermeture (9) interne peut être lié par complémentarité de formes et par adhérence au conteneur dorsal (3) rabattable latéralement.

4. Procédé pour mettre une combinaison protectrice en utilisant un dispositif selon une des revendications 1 à 3, **caractérisé par** les étapes suivantes :
• après qu'un astronaute (8) est entré dans la combinaison (1), on relie de manière étanche et hermétique la chambre de décontamination (7) à la paroi extérieure de la zone de séjour (5) à l'aide du système d'étanchéité et de fermeture (12) externe associé,
• on verrouille de manière étanche et hermétique le conteneur dorsal (3) se trouvant à l'intérieur de la chambre de décontamination (7) sur la partie dos de la combinaison (1), à l'aide de son système d'étanchéité et de fermeture (6) intérieur,
• on amène l'intérieur de la chambre de décontamination (7, 7') au niveau de pression extérieure,
• on sépare le conteneur dorsal (3) du système d'étanchéité et de fermeture interne (9) de la chambre de décontamination (7, 7'),
• on déverrouille le système d'étanchéité et de fermeture (12) extérieur,
• on sépare la combinaison (1) de la paroi extérieure de la zone de séjour (5).
